# EUROPÄISCHE PATENTSCHRIFT

(11) **EP 1 099 587 B1**
(45) Veröffentlichungstag und Bekanntmachung des Hinweises auf die Patenterteilung: **21.06.2006**
(21) Anmeldenummer: 00123601.7
(22) Anmeldetag: 28.10.2000
(51) Int. Cl.: B60J 7/20

(54) **Verstellbarer Handgriff**
Adjustable handle
Poignée déplaçable

(30) Priorität: 11.11.1999 DE 19954114
(43) Veröffentlichungstag der Anmeldung: 16.05.2001
(73) Patentinhaber: Bayerische Motoren Werke Aktiengesellschaft, 80809 München (DE)
(72) Erfinder: Hambusch, Thorsten, 84034 Landshut (DE)

(56) Entgegenhaltungen:
- EP-A- 0 356 640
- DE-B- 1 258 669
- DE-C- 19 541 168
- DE-C- 19 542 906
- DE-U- 29 809 006

## Beschreibung

Die Erfindung betrifft eine Handgriffeinrichtung, mit den im Oberbegriff des Patentanspruches 1 angegebenen Merkmalen.

Eine derartige Handgriffeinrichtung ist in der DE 197 13 606 C1 an der hinteren Platte eines aus drei Platten gebildeten Plattenverbandes befestigt, der ein Viergelenk bildet. Der Plattenverband ist im Heckbereich eines Kraftfahrzeugs mit einem Klapp- bzw. Faltverdeck vorgesehen und weist eine höhenverstellbare mittlere Bodenplatte auf, die hochgestellt den Gepäckraum vergrößert. In der tiefgestellten Lage ist auf der Bodenplatte das geöffnete Klapp- bzw. Faltverdeck ablegbar. Der Handgriff ist zwischen einer Gebrauchslage und einer Nichtgebrauchslage schwenkbar, in der eine nicht näher beschriebene Rasteinrichtung den Handgriff fixieren soll. Beim manuellen Hochstellen der Bodenplatte wird über den Handgriff eine entsprechende Kraft bzw. ein Drehmoment direkt in die hintere Platte des Plattenverbandes eingeleitet. Um dabei eine Beschädigung der hinteren Platte zu vermeiden, ist diese entsprechend steif auszubilden. Dies schränkt jedoch die Gestaltung der hinteren Platte und von damit verbundenen Teilen ein. Ist die hintere Platte weniger steif ausgebildet, so kann sie sich unter der Belastung insbesondere bei unsymmetrisch angeordnetem Handgriff verformen und dabei beschädigt werden. Es erscheint auch nicht ausgeschlossen, dass sich die Rasteinrichtung beim Überfahren von Bodenunebenheiten löst und dann mit Geräuschen verbundene Bewegungen des Handgriffes nicht mehr verhindert.

Die DE-C-195 41 168, die DE-C-195 42 906, die DE-U-298 09 006 und die EP-A-0 356 640 weisen jeweils keinen Handgriff auf, mit dem ein Verstellteil direkt oder über eine Konsole verstellbar wäre.

In der DE-B-1 258 669 ist ein Handgriff um eine Achse an einem Einstellglied schwenkbar. Der Handgriff ist von einer Federanordnung in eine Ausgangslage belastet und kann manuell gegen die Kraft einer Feder aus der Ausgangslage in eine Betätigungslage geschwenkt werden. Ist das Einstellglied wie angegeben ein hydraulisches oder pneumatisches Ventil, so ist das Ventil durch die Kraft der Feder in seine Ausgangslage belastet. Ein manuell an dem Handgriff bewirktes Moment ist lediglich erforderlich, um die rückstellende Kraft der Feder zu überwinden. Das an der Achse bzw. an einem inneren Teil des Einstellgliedes manuell bewirkte Moment liegt in Richtung der Achse. Der in dem Einstellglied angeordnete Ventilkörper, dürfte über den Handgriff verdrehbar sein. Es ist anzunehmen, dass der Ventilkörper wenigstens eine Durchgangsöffnung aufweist, die abhängig von der Stellung des Handgriffes mehr oder weniger mit einer anderen, vermutlich ortsfesten Durchgangsöffnung im Einstellglied in Überdeckung steht und damit einen gewünschten hydraulischen oder pneumatischen Stromfluss durch die Durchgangsöffnungen ermöglicht oder in einer anderen Winkelstellung, beispielsweise in der Ausgangslage des Handgriffes einen Stromfluss durch die Durchgangsöffnungen verhindert. Dynamische Belastungen des Handgriffes sind nicht angegeben, so dass die Vorspannkraft der Feder gering sein dürfte, wodurch auch das an der Achse bewirkte Moment eher gering ist.

Der Erfindung liegt die Aufgabe zu Grunde, einen verstellbaren Handgriff mit den Merkmalen im Oberbegriff des Patentanspruches 1 anzugeben, der eine günstigere manuelle Kraft- bzw. Momenteinleitung in das Verstellteil ermöglicht und jeweils mit weniger oder keinen Geräuschen verstellbar sowie in der Nichtgebrauchslage festgehalten ist.

Diese Aufgabe ist durch die im Patentanspruch 1 angegebenen Merkmale gelöst. Vorteilhafte Ausgestaltungen der Erfindung sind den Unteransprüchen entnehmbar.

Die den Handgriff in die Nichtgebrauchslage belastende Feder kann so ausgelegt bzw. vorgespannt sein, dass der nicht benötigte Handgriff von der Feder zuverlässig gegen einen Anschlag belastet ist und bei Verwendung des Griffes beispielsweise an einem Kraftfahrzeug auch im Fahrbetrieb des Kraftfahrzeugs an diesem Anschlag in Anlage bleibt. Bei der zusätzlichen Verwendung einer Rasteinrichtung bewirkt die Feder, dass der nicht benötigte Handgriff auch bei extremen Erschütterungen in der Nichtgebrauchslage festgehalten bleibt. Der am Handgriff angreifende Dämpfer kann so ausgelegt sein, dass eine Schwenkbewegung des Handgriffes in die Gebrauchslage nicht oder kaum erschwert ist und eine durch die Kraft der Feder bewirkte Rückstellbewegung des Handgriffes in die Nichtgebrauchslage von dem Dämpfer derart abgebremst wird, dass der Handgriff nicht hart oder geräuschvoll an dem Anschlag zur Anlage kommt.

Die Schwenkachse ist an einer Konsole ausgebildet, die separat mit dem Verstellteil zu verbinden ist. Dadurch kann der Handgriff, die Feder und der Dämpfer mit seinen Teilen an der Konsole vormontiert werden, die dann insgesamt in einem einfachen Arbeitsgang mit dem Verstellteil fest oder vorzugsweise lösbar zu verbinden ist. Eine derartige Baueinheit eines Handgriffes ist mit geringen Kosten zu fertigen und ermöglicht eine hohe Dämpfungsrate des Dämpfers, der beispielsweise ein Silikondämpfer ist.

Ein Ausführungsbeispiel der Erfindung wird anhand einer Zeichnung näher erläutert. Es zeigen
- Figur 1: eine Baueinheit eines Handgriffes in Explosionsdarstellung und
- Figur 2: eine rückwärtige Ansicht auf die Baueinheit des Handgriffes.

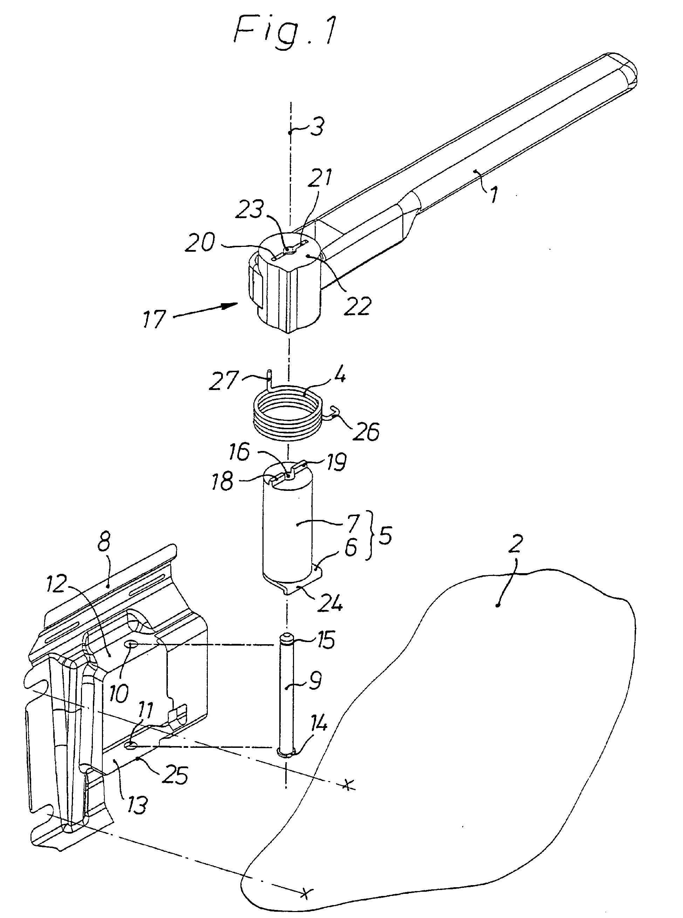

Der in Figur 1 dargestellte Handgriff 1 ist an einem lediglich angedeuteten Verstellteil 2, beispielsweise einer hinteren Platte eines aus drei Platten gebildeten Plattenverbandes, um eine Schwenkachse 3 zwischen einer Nichtgebrauchlsage und einer Gebrauchslage schwenkbar, in der über den Handgriff 1 an dem Verstellteil 2 direkt oder unter Zwischenschaltung eines oder mehrerer Bauteile eine Kraft bzw. ein Moment bewirkt werden kann. Der Plattenverband ist beispielsweise in der DE 197 13 606 C1 beschrieben, wobei das Verstellteil 2 die hintere Platte des Plattenverbandes bildet, der drei viergelenkartig verbundene Platten aufweist. Der Handgriff 1 ist von einer als Drehfeder ausgebildeten Feder 4 in die Nichtgebrauchslage belastet, die der dargestellten Winkellage des Handgriffes 1 entspricht. Wird der um die Schwenkachse 3 im Gegenuhrzeigersinn um 90 ° in die Gebrauchslage geschwenkte Handgriff 1 los gelassen, so bewirkt die Feder 4 eine selbsttätige Rückstellbewegung des Handgriffes 1 in die Nichtgebrauchslage. Die Rückstellbewegung ist von einem Drehdämpfer 5 gedämpft, der zwei Dämpfungsteile 6, 7 aufweist, von denen ein Dämpferteil 6 drehfest mit einer Konsole 8 und das andere Dämpferteil 7 drehfest mit dem Handgriff 1 verbunden sind. Die Schwenkachse 3 des Handgriffes 1 ist an der Konsole 8 ausgebildet, die mit dem Verstellteil 2 vorzugsweise lösbar oder unlösbar verbunden ist. Die Schwenkachse 3 ist durch die Mittelachse eines Lagerbolzens 9 gebildet, der zwei fluchtende Durchtrittsöffnungen 10, 11 in zwei an der Konsole 8 ausgebildeten Wandbereichen 12, 13 durchsetzt, die einen Abstand voneinander aufweisen. Der Lagerbolzen 9 weist ein radial vergrößertes Kopfteil 14 auf, das nach der Montage axial in der Figur von unten an dem unteren Wandbereich 13 anliegt. Am anderen Stirnbereich ist an dem Lagerbolzen 9 eine radiale Umfangsnut 15 ausgebildet, in die ein nicht dargestellter Sicherungsring eingreift, der nach der Montage von oben an dem oberen Wandbereich 12 der Konsole 8 anliegt und dadurch den Lagerbolzen 9 axial an der Konsole 8 fixiert. Die beiden Dämpferteile 6, 7 bilden eine gemeinsame, durch den Drehdämpfer 5 axial hindurchgehende Bolzenöffnung 16, die von dem Lagerbolzen 9 axial durchsetzt ist. Der Handgriff 1 ist an einem Endbereich 17 um die Schwenkachse 3 topfförmig ausgebildet und mit diesem Endbereich 17 axial auf das Dämpferteil 7 bis in eine Drehkoppellage aufsteckbar, in der zwei von dem Dämpferteil 7 axial abstehende Mitnehmernasen 18, 19 in jeweils eine axial zugängliche Mitnahmeausnehmung 20, 21 im Boden des topfförmigen Endbereiches 17 eingreifen und dadurch den Handgriff 1 drehfest mit dem Dämpferteil 7 verbinden. Die beiden Mitnehmernasen 18, 19 und die beiden Mitnahmeausnehmungen 20, 21 weisen jeweils einen radialen Abstand zur Schwenkachse 3 auf und sind symmetrisch zu dieser Schwenkachse 3 angeordnet. Im Boden 22 des topfförmigen Endbereiches 17 ist zentral eine Durchgangsöffnung 23 ausgebildet, die mit der Bolzenöffnung 16 im Drehdämpfer 5 sowie den Durchtrittsöffnungen 10, 11 in der Konsole 8 fluchtet und von dem Lagerbolzen 9 durchsetzt ist. Das Dämpferteil 6 ist nach der Montage des Handgriffes über einen axial nach außen abgewinkelten Flansch 24 drehfest mit der Konsole 8 verbunden, wobei der Flansch 24 linien- oder flächenhaft an einem Rand 25 des Wandbereiches 13 an der Konsole 8 anliegt. Die Schenkelfeder 4 ist nach der Montage auf den etwa zylindrischen Aussendurchmesser des topfförmigen Enbereiches 17 am Handgriff 1 aufgesteckt und stützt sich mit dem Schenkelende 26 an der Konsole 8 und mit dem anderen Schenkelende 27 in einem radialen Abstand zur Schwenkachse 3 am Handgriff 1 ab.

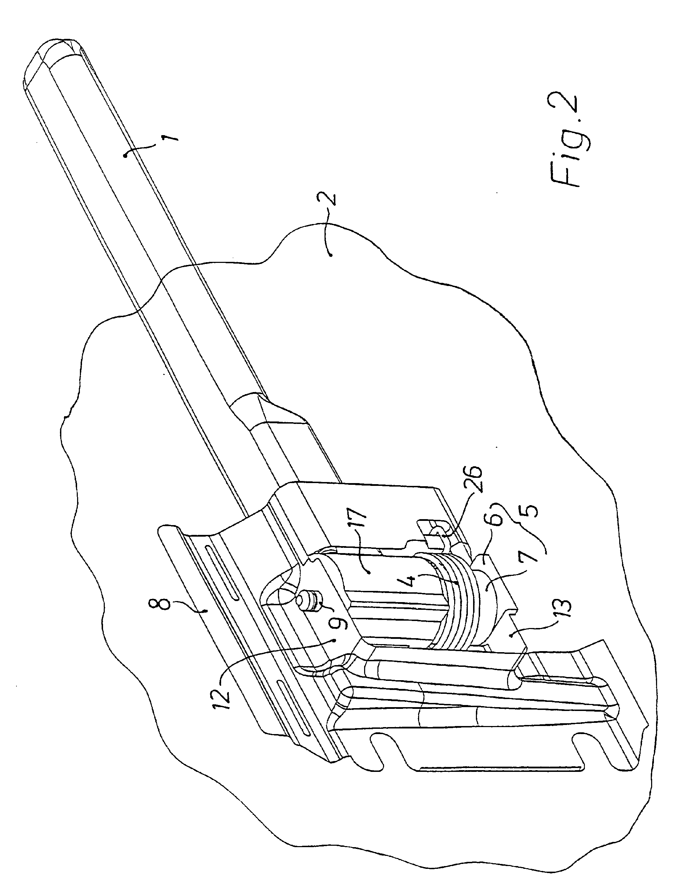

Wie Figur 2 zu entnehmen ist, die den am Verstellteil 2 montierten Handgriff 1 in seiner Nichtgebrauchslage aus einer Sicht entgegen der Fahrrichtung von hinten darstellt, sind der topfförmige Endbereich 17 des Handgriffes 1 und der komplette Drehdämpfer 5 axial zwischen den beiden Wandbereichen 12, 13 der Konsole 8 angeordnet und von diesen Wandbereichen 12, 13 bzw. daran abgestützten Zwischenteilen axial fixiert. Wird der Handgriff 1 um etwa 90° um die Mittelachse des Bolzens 9 im Gegenuhrzeigersinn in die Gebrauchslage geschwenkt, so kann von einer Bedienperson, die bei geöffneter Heck- bzw. Gepäckraumklappe den Handgriff 1 ergreift, über diesen an dem Verstellteil 2 eine Kraft bzw. ein Drehmoment um eine Fahrzeugquerachse bewirkt werden, wodurch das Verstellteil 2 verschwenkt und eine daran schwenkbar befestigte Bodenplatte in eine Hochlage zu verstellt. In der Hochlage ist unter der Bodenplatte ein Aufnahmeraum gebildet, der den dahinter befindlichen Gepäckraum vergrößert. Ein wesentlicher Vorteil dieser Anordnung ist darin zu sehen, dass über den in die Gebrauchslage geschwenkten Handgriff 1 ein Moment bewirkt werden kann, das zunächst von den topfförmigen Endbereich 17 auf den Drehdämpfer 5 übertragen wird, der sich über den Lagerbolzen 9 an den Wandbereichen 12, 13 der Konsole 8 auf einer großen Basislänge abstützt, wodurch das mit der Konsole 8 verbundene Verstellteil 2 lokal wesentlich weniger beansprucht ist. Auf diese Weise kann über den Handgriff 1 ein großes Verstellmoment an dem Verstellteil 2 bewirkt werden, um das Verstellteil 2 und die damit verbundene Bodenplatte in eine Hochlage zu verstellen, in der unter der Bodenplatte ein den Gepäckraum des Kraftfahrzeugs vergrößernder Aufnahmeraum gebildet ist. In dazu umgekehrter Weise kann die Bodenplatte bzw. der Plattenverband über den Handgriff 1 in eine Tieflage verstellt werden, in der sich auf der mittleren Bodenplatte ein geöffnetes Falt- oder Klappverdeck ablegen lässt.

Bei der vorliegenden Ausführung beträgt das Bremsmoment des Dämpfers ca. 70 Ncm. Die Feder ist bei der vorliegenden Ausführung so ausgebildet, dass bei einer Länge des Handgriffes von etwa 125 mm die Betätigungskraft zum Verstellen des Handgriffes in die Gebrauchslage etwa 90 N beträgt. Die Baueinheit erfordert lediglich einen geringen Bauraum und ermöglicht neben einer hohen Kraft- bzw. Momentenübertragung eine hohe Dämpfungsrate des Dämpfers. Die verwendeten Teile lassen sich in einfacher Weise ineinander stecken und können dadurch leicht montiert werden.

## Patentansprüche

1. Handgriffeinrichtung an einem Verstellteil (2) mit einem Verstellbaren Handgriff (1), der an dem Verstellteil (2) um eine Schwenkachse (3) von einer Nichtgebrauchslage in eine Gebrauchslage schwenkbar ist, in der eine an dem Handgriff (1) bewirkte Kraft an dem Verstellteil (2) ein Moment um eine Querachse zur Schwenkachse (3) bewirkt, wodurch sich das Verstellteil (2) verstellt, **dadurch gekennzeichnet, dass** der Handgriff (1) von einer Feder (4) in die Nichtgebrauchslage belastet ist und ein Dämpfer (5) eine durch die Feder (4) bewirkte Schwenkbewegung des Handgriffes (1) in die Nichtgebrauchslage dämpft, und die Schwenkachse (3) an einer Konsole (8) ausgebildet ist, die mit dem Verstellteil fest oder lösbar verbunden ist.

2. Handgriffeinrichtung nach Anspruch 1, **dadurch gekennzeichnet, dass** die Schwenkachse (3) durch die Mittelachse eines Lagerbolzens (9) gebildet ist, der zwei fluchtende Durchtrittsöffnungen (10, 11) in zwei an der Konsole (8) ausgebildeten Wandbereichen (12, 13) durchsetzt, die einen Abstand voneinander aufweisen.

3. Handgriffeinrichtung nach Anspruch 2, **dadurch gekennzeichnet, dass** der Lagerbolzen (9) an wenigstens einem der Wandbereiche (12 bzw. 13) axial fixiert ist.

4. Handgriffeinrichtung nach einem der Ansprüche 1 bis 3, **dadurch gekennzeichnet, dass** der Dämpfer ein Drehdämpfer (5) mit zwei gegeneinander verdrehbaren Dämpferteilen (6, 7) ist, von denen ein Dämpferteil (6) drehfest mit der Konsole (8) und das andere Dämpferteil (7) drehfest mit dem Handgriff (1) verbunden oder zu verbinden ist.

5. Handgriffeinrichtung nach einem der Ansprüche 1 bis 4, **dadurch gekennzeichnet, dass** die beiden Dämpferteile (6, 7) eine gemeinsame, durch den Dämpfer (5) axial hindurchgehende Bolzenöffnung (16) bilden, die von dem Lagerbolzen (9) durchsetzt ist.

6. Handgriffeinrichtung nach Anspruch 4 oder 5, **dadurch gekennzeichnet, dass** der Handgriff (1) an einem Endbereich (17) um die Schwenkachse (3) topfförmig ausgebildet und der topfförmige Endbereich (17) auf ein Dämpferteil (7) axial bis in eine Drehkoppellage aufsteckbar ist, in der eine von dem Dämpferteil (7) oder dem Handgriff axial oder radial abstehende Mitnehmernase (18, 19) in eine Mitnahmeausnehmung (20, 21) an dem anderen Teil, an dem Handgriff (1) oder Dämpferteil eingreift.

7. Handgriffeinrichtung nach Anspruch 6, **dadurch gekennzeichnet, dass** an der dem Boden (22) des topfförmigen Endbereiches (17) zugewandten Stirnseite des Dämpferteiles (7) zwei axial vorstehende Mitnehmernasen (18, 19) ausgebildet sind, die jeweils einen radialen Abstand von der Schwenkachse (3) aufweisen und in der Drehkoppellage des Handgriffes (1) in jeweils eine axial offene Mitnahmeausnehmung (20, 21) im topfförmigen Endbereich (17) des Handgriffes (1) eingreifen.

8. Handgriffeinrichtung nach Anspruch 7, **dadurch gekennzeichnet, dass** zentral im Boden (22) des topfförmigen Endbereiches (17) eine Durchgangsöffnung (23) ausgebildet ist, die mit der Bolzenöffnung (16) im Dämpfer (Drehdämpfer 5) sowie den Durchtrittsöffnungen (10, 11) an der Konsole (8) fluchtet und von dem Lagerbolzen (9) durchsetzt ist.

9. Handgriffeinrichtung nach einem der Ansprüche 6 bis 8, **dadurch gekennzeichnet, dass** die Feder eine auf dem Aussendurchmesser des topfförmigen Endbereiches (17) angeordnete Schenkelfeder (4) ist, die sich mit einem Schenkelende (26) an der Konsole (8) und mit dem anderen Schenkelende (27) am Handgriff (1) abstützt.

10. Handgriffeinrichtung nach einem der Ansprüche 6 bis 9, **dadurch** zeichnet, dass der topfförmige Endbereich (17) und der Dämpfer (5) axial zwischen den beiden Wandbereichen (12, 13) an der Konsole (8) angeordnet und von diesen Wandbereichen (12, 13) oder daran abgestützten Zwischenteilen axial fixiert sind.

## Claims

1. A handle arrangement on an adjustable part (2), comprising an adjustable handle (1) which is pivotable on an adjustable part (2) around a pivot (3) from an inoperative position into an operative position in which a force exerted on the handle (1) exerts a torque on the adjustable part (2) around an axis at an angle to the pivot axis (3), thus adjusting the adjustable part (2), **characterised in that** the handle (1) is biased by a spring (4) into the inoperative position and a damper (5) damps the pivoting motion of the handle (1) caused by the spring (4) in the inoperative position, and the pivot (3) is formed on a bracket (8) detachably or non-detachably connected to the adjustable part.

2. A handle arrangement according to claim 1, **characterised in that** the pivot (3) is the central axis of a bearing pin (9) which extends through two aligned passage openings (10, 11) in two spaced-apart wall regions (12, 13) formed on the bracket (8).

3. A handle arrangement according to claim 2, **characterised in that** the bearing pin (9) is axially fixed to at least one of the wall regions (12 or 13).

4. A handle arrangement according to any of claims 1 to 3, **characterised in that** the damper is a rotary damper (5) comprising two damper parts (6, 7) rotatable relative to one another, one damper part (6) being co-rotatably connected or connectable to the bracket (8) and the other damper part (7) being co-rotatably connected or connectable to the handle (1).

5. A handle arrangement according to any of claims 1 to 4, **characterised in that** the two damper parts (6, 7) form a common pin opening (16) through which the bearing pin (9) extends axially through the damper (5).

6. A handle arrangement according to claim 4 or 5, **characterised in that** a pot-shaped end region (17) of the handle (1) is formed around the pivot (3) and the pot-shaped end region (17) is axially mountable on a damper part (7) practically up to a rotary coupling position in which an engaging lug (18, 19) projecting axially or radially from the damper part (7) or handle engages in a recess (20, 21) on the other part, on the handle (1) or the damper part.

7. A handle arrangement according to claim 6, **characterised in that** two axially projecting engaging lugs (18, 19) are formed on the front face of the damper part (7) facing the end (22) of the pot-shaped end region (17), the lugs each being radially spaced apart from the pivot (3) and engaging in a respective axially open recess (20, 21) in the pot-shaped end region (17) of the handle (1) when the handle (1) is in the rotary coupled position.

8. A handle arrangement according to claim 7, **characterised in that** a passage opening (23) is formed centrally in the end (22) of the pot-shaped end region (17) and is in line with the pin opening (16) in the damper (rotary damper 5) and with the passage openings (10, 11) in the bracket (8), through which the bearing pin (9) extends.

9. A handle arrangement according to any of claims 6 to 8, **characterised in that** the spring is a spiral spring (4) disposed on the outer diameter of the pot-shaped end region (17), one end (26) of the spring abutting the bracket (8) and the other end (27) of the spring abutting the handle (1).

10. A handle arrangement according to any of claims 6 to 9, **characterised in that** the pot-shaped end region (17) and the damper (5) are disposed axially between the two wall regions (12, 13) on the bracket (8) and are axially fixed by the said wall regions (12, 13) or by intermediate parts abutting them.

## Revendications

1. Dispositif de poignée sur une pièce déplaçable (2) la poignée déplaçable (1) pouvant pivoter sur la pièce déplaçable (2), autour d'un axe de rotation (3) d'une position de repos à une position d'utilisation dans laquelle une force appliquée sur la poignée (1) exerce un couple sur la pièce déplaçable (2) autour d'un axe perpendiculaire à l'axe de rotation (3), ce qui permet à la pièce déplaçable (2) de bouger,
**caractérisé en ce qu'**
en position de repos la poignée (1) est sollicitée par un ressort (4) et un amortisseur (5) atténue un mouvement de pivotement de la poignée (1) engendré par le ressort (4) et l'axe de rotation (3) est placé sur une console (8) reliée de manière fixe ou mobile à la pièce déplaçable.

2. Dispositif de poignée selon la revendication 1,
**caractérisé en ce que**
l'axe de rotation (3) est formé par l'axe central d'un boulon de support (9) qui traverse deux ouvertures transversales alignées (10, 11) dans deux zones de paroi (12, 13) de la console (8), situées à une certaine distance l'une de l'autre.

3. Dispositif de poignée selon la revendication 2,
**caractérisé en ce que**
le boulon de support (9) est fixé de manière axiale à au moins l'une des zones de paroi (12 ou 13).

4. Dispositif de poignée selon l'une des revendications 1 à 3,
**caractérisé en ce que**
l'amortisseur est un amortisseur de rotation (5) équipé de deux pièces d'amortisseur (6, 7) tournant dans un sens opposé, l'une, la pièce. (6), étant reliée ou devant être reliée de manière fixe à la console (8) et l'autre, la pièce (7), étant reliée ou devant être reliée de manière fixe à la poignée (1).

5. Dispositif de poignée selon l'une des revendications 1 à 4,
**caractérisé en ce que**
les deux pièces d'amortisseur (6, 7) forment une ouverture de boulon (16) commune traversant axialement l'amortisseur (5) que traverse le boulon de support (9).

6. Dispositif de poignée selon la revendication 4 ou 5,
**caractérisé en ce que**
la poignée (1) est conçue sur une extrémité en forme de creuset (17) autour de l'axe de rotation (3) et cette extrémité en forme de creuset (17) est relevable axialement sur la pièce d'amortisseur (7) jusqu' à une position de couplage rotatif, dans laquelle un taquet (18, 19) éloigné axialement ou radialement de la pièce d'amortisseur (7) ou de la poignée s'engage dans la poignée (1) ou la pièce d'amortisseur (7), par un logement d'entraînement (20, 21) de l'autre pièce.

7. Dispositif de poignée selon la revendication 6,
**caractérisé en ce que**
sur la face frontale de la pièce d'amortisseur (7) adjacente à la base (22) de l'extrémité en forme de creuset (17), se trouvent deux taquets (18, 19) disposés axialement qui, situés à une distance radiale de l'axe de rotation (3), s'engagent respectivement, en position de couplage rotatif de la poignée (1), dans un logement d'entraînement (20, 21) ouvert axialement au niveau de l'extrémité en forme de creuset (17) de la poignée (1).

8. Dispositif de poignée selon la revendication 7,
**caractérisé en ce que**
à la base (22) de l'extrémité en forme de creuset (17), au centre, une hauteur libre (23) s'aligne avec l'ouverture de boulon (16) de l'amortisseur (amortisseur de rotation 5) ainsi qu'avec les ouvertures transversales (10, 11) de la console (8) et est traversée par le boulon de support (9).

9. Dispositif de poignée selon l'une des revendications 6 à 8,
**caractérisé en ce que**
le ressort est un ressort spiralé (4) placé sur le diamètre extérieur de l'extrémité en forme de creuset (17), il s'appuie, par une extrémité spiralée (26), contre la console (8) et, par l'autre extrémité spiralée (27), contre la poignée (1).

10. Dispositif de poignée selon l'une des revendications 6 à 9,
**caractérisé en ce que**
l'extrémité en forme de creuset (17) et l'amortisseur (5) sont placés entre les deux zones de paroi (12, 13) de la console (8) et fixés axialement par ces zones de paroi (12, 13) ou par les pièces intermédiaires qui s'y appuient.
